# EUROPEAN PATENT APPLICATION

(11) **EP 4 468 561 A1**
(43) Date of publication of application: **27.11.2024**
(21) Application number: 23743110.1
(22) Date of filing: 05.01.2023
(51) Int. Cl.: H02J 15/00, H01M 8/00, H01M 8/04, H01M 8/0606, H02J 7/00, H02J 7/34, H02J 7/35

(54) **MOVABLE HYDROGEN SUPPLY SYSTEM**

(30) Priority: 21.01.2022 JP 2022007942
(71) Applicant: NTN Corporation, Osaka-shi Osaka 530-0005 (JP)
(72) Inventor: AKAGAWA, Mitsuru, Kuwana-shi, Mie 511-0867 (JP)
(74) Representative: Bockhorni & Brüntjen Partnerschaft Patentanwälte mbB
(86) International application number: PCT/JP2023/000070
(87) International publication number: WO 2023/140114

(57) **Abstract**

A mobile hydrogen supply system (100) includes a natural energy power generation device (12) that generates electric power from natural energy, and a hydrogen generation device (1) that generates hydrogen. The hydrogen generation device (1) is operable on electric power generated by the natural energy power generation device (12), and the natural energy power generation device (12) and the hydrogen generation device (1) are transportable.

## Description

### TECHNICAL FIELD

The present invention relates to a mobile hydrogen supply system.

### BACKGROUND ART

Hydrogen is used in various fields including, for example, semiconductor manufacturing industry, petrochemical industry, and electric power generation.

As a conventional technique for using hydrogen as energy, there is a technique according to which a hydrogen supply device that is fixedly placed is operated on electric power generated from natural energy such as solar energy, and electric power is generated from hydrogen supplied as a fuel from the hydrogen supply device, by a power generation device such as fuel cell that is placed fixedly (PTL 1).

As another conventional technique for using hydrogen as energy, there is a technique according to which a hydrogen supply device and a power generation device such as fuel cell are mounted on a single movable vehicle such as forklift, and the movable vehicle is moved with electric power generated by the power generation device (PTL 2).

### CITATION LIST

### PATENT LITERATURE

PTL 1: Japanese Patent Laying-Open No. 2020-47417
PTL 2: Japanese Patent Laying-Open No. 2019-7609

### SUMMARY OF INVENTION

### TECHNICAL PROBLEM

Conventional hydrogen supply systems that supply hydrogen are generally installed fixedly. In the case, however, where a hydrogen-demanding place that demands hydrogen suffers from a shortage of hydrogen due to a disaster or the like, for example, the hydrogen-demanding place cannot overcome the shortage of hydrogen in a short time. If it is possible to provide a movable hydrogen supply system and move the hydrogen supply system to the hydrogen-demanding place so that hydrogen can be supplied from the hydrogen supply system, it would be possible to overcome a short-term shortage of hydrogen.

When the movable hydrogen supply system is transported to and installed at a hydrogen-demanding place, however, the following problem may arise.

In the case of the movable hydrogen supply system, it is difficult to supply hydrogen to the hydrogen-demanding place even when the hydrogen supply system can be transported to the place, if the hydrogen-demanding place to which the hydrogen supply system is transported has no available energy source such as electric power necessary for supplying hydrogen.

An object of the present invention is to provide a mobile hydrogen supply system having an available energy source at a hydrogen-demanding place to which the system is transported, when the system is transported to and placed at the hydrogen-demanding place for supplying hydrogen to the place.

### SOLUTION TO PROBLEM

A mobile hydrogen supply system according to the present disclosure includes: a power generation device that generates electric power from natural energy; and a hydrogen generation device that generates hydrogen, the hydrogen generation device is operable on electric power generated by the power generation device, and the power generation device and the hydrogen generation device are transportable.

### ADVANTAGEOUS EFFECTS OF INVENTION

The mobile hydrogen supply system according to the present disclosure has an available energy source at a hydrogen-demanding place to which the hydrogen supply system is transported, when the hydrogen generation device is to supply hydrogen.

### BRIEF DESCRIPTION OF DRAWINGS

Fig. 1 is a diagram showing a hydrogen generation device 1 and a natural energy power generation device 12 of a hydrogen supply system 100 according to Embodiment 1.
Fig. 2 is a side view of a mobile structure 10, showing a configuration of natural energy power generation device 12 according to Embodiment 1.
Fig. 3 is a diagram showing another configuration of hydrogen supply system 100 according to Embodiment 1.
Fig. 4 is a diagram showing a configuration of a hydrogen supply system 101 according to Embodiment 2.
Fig. 5 is a diagram showing a configuration of a hydrogen supply system 102 according to Embodiment 3.
Fig. 6 is a diagram showing a configuration of a hydrogen supply system 103 according to Embodiment 4.
Fig. 7 is a diagram showing a configuration of a hydrogen supply system 104 according to Embodiment 5.

### DESCRIPTION OF EMBODIMENTS

Embodiments of the present invention are described hereinafter based on the drawings. In the following, a plurality of embodiments are described, and features described in connection with the embodiments are originally intended to be combined as appropriate. In the following drawings, the same or corresponding parts are denoted by the same reference numerals, and a description thereof is not herein repeated.

### <Embodiment 1>

### [Configuration of Mobile Hydrogen Supply System 100]

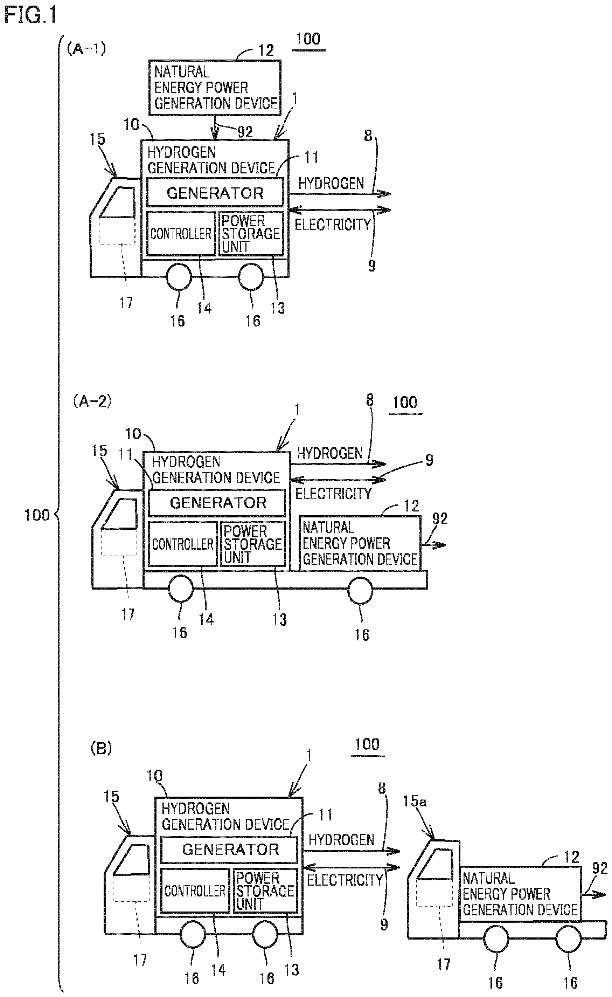

Fig. 1 is a diagram showing a hydrogen generation device 1 and a natural energy power generation device 12 of a mobile hydrogen supply system 100 according to Embodiment 1. (A-1) and (A-2) of Fig. 1, and (B) of Fig. 1 show respective variations of the configuration of hydrogen generation device 1 and natural energy power generation device 12 that are included in hydrogen supply system 100.

Hydrogen supply system 100 includes at least hydrogen generation device 1 and natural energy power generation device 12 as shown in Fig. 1. Hydrogen generation device 1 is placed inside a box-shaped mobile structure 10 and generates hydrogen. Hydrogen generation device 1 and natural energy power generation device 12 are transportable to any location by a transportation vehicle such as transportation vehicles 15, 15a, and other transportation devices such as railway vehicle and aircraft may be used during the transportation.

(A-1) and (A-2) of Fig. 1 each show an example of hydrogen supply system 100 in which natural energy power generation device 12 and hydrogen generation device 1 are mounted on transportation vehicle 15 in such a manner that they are attachable to and detachable from transportation vehicle 15.

Hydrogen generation device 1 includes mobile structure 10, a generator 11, a power storage unit 13, and a controller 14. Natural energy power generation device 12 is a device that generates electric power from natural energy as described later herein. Natural energy power generation device 12 is mounted outside or inside mobile structure 10.

Natural energy power generation device 12 supplies electric power generated from natural energy to power storage unit 13 via an electric cable 92. Power storage unit 13 includes a storage battery, and stores electric power supplied from natural energy power generation device 12.

Generator 11 is a device operated on electric power stored in power storage unit 13, and generates hydrogen by water electrolysis. Water stored in a tank included in generator 11 is used as water to be electrolyzed.

Controller 14 is a device that is operated on electric power stored in power storage unit 13, and performs control of each device of hydrogen generation device 1, such as control related to generation of hydrogen by generator 11 and control related to power storage and power discharge by power storage unit 13. Controller 14 includes a CPU (Central Processing Unit), a memory (including a volatile memory and a nonvolatile memory), and an input/output buffer for inputting and outputting various signals, for example. The CPU executes a program stored in the memory to control each device in hydrogen generation device 1.

Hydrogen generated by generator 11 of hydrogen generation device 1 is supplied to the outside of hydrogen generation device 1 via a pipe 8 connected to generator 11.

In hydrogen generation device 1, a reservation unit that reserves hydrogen generated by generator 11 may be provided, to enable the hydrogen reserved in the reservation unit to be supplied to the outside of hydrogen generation device 1 through pipe 8. The reservation unit is controlled by controller 14 to adjust the temperature of the reserved hydrogen. In addition, the reservation unit may have a function of changing the pressure of the reserved hydrogen.

Electric power stored in power storage unit 13 can be supplied to the outside of hydrogen generation device 1 via an electric cable 9 connected to power storage unit 13. In addition, electric power can be supplied to power storage unit 13 via electric cable 9 from various power source devices provided outside hydrogen generation device 1, and power storage unit 13 can store the supplied electric power.

In hydrogen supply systems 100 shown in (A-1) and (A-2) of Fig 1, natural energy power generation device 12 and hydrogen generation device 1 are mounted on transportation vehicle 15. Transportation vehicle 15 is capable of being self-propelled with a plurality of wheels 16 driven by a drive unit including an internal combustion engine such as gasoline engine or diesel engine. Transportation vehicle 15 is capable of being self-propelled by a driver riding in an operator's compartment 17 and performing a driving operation. Hydrogen generation device 1 may be fixedly mounted on transportation vehicle 15.

With such a configuration, hydrogen supply systems 100 shown in (A-1) and (A-2) of Fig. 1 enable hydrogen generation device 1 on which natural energy power generation device 12 is mounted, or hydrogen generation device 1 and natural energy power generation device 12 that are mounted separately to be transported to a destination by transportation vehicle 15.

Natural energy power generation device 12 may be mounted on mobile structure 10 in which hydrogen generation device 1 is housed as shown in (A-1) or Fig. 1, or natural energy power generation device 12 and hydrogen generation device 1 may be separately mounted on one transportation vehicle 15 as shown in (A-2) of Fig. 1.

At a destination, hydrogen supply systems 100 shown in (A-1) and (A-2) of Fig. 1 in which hydrogen generation device 1 and natural energy power generation device 12 are mounted on transportation vehicle 15, or either hydrogen generation device 1 or natural energy power generation device 12 is removed from transportation vehicle 15, enable supply of hydrogen and electric power to the outside of hydrogen generation device 1.

(B) of Fig. 1 shows an example of hydrogen supply system 100 where hydrogen generation device 1 is mounted on transportation vehicle 15 in such a manner that hydrogen generation device 1 is attachable to and detachable from transportation vehicle 15, and natural energy power generation device 12 is mounted on transportation vehicle 15a different from transportation vehicle 15 in such a manner that natural energy power generation device 12 is attachable to and detachable from transportation vehicle 15a. Transportation vehicle 15a has a similar configuration to transportation vehicle 15.

With such a configuration, hydrogen supply system 100 shown in (B) of Fig. 1 enables hydrogen generation device 1 and natural energy power generation device 12 to be transported to a destination by two transportation vehicles 15 and 15a respectively.

At a destination, hydrogen supply system 100 shown in (B) of Fig. 1 can supply hydrogen and electric power to the outside of hydrogen generation device 1 by connecting hydrogen generation device 1 mounted on transportation vehicle 15 or removed from transportation vehicle 15 and natural energy power generation device 12 mounted on transportation vehicle 15a or removed from transportation vehicle 15a by an electric cable 92.

Hydrogen generation device 1 and natural energy power generation device 12 of hydrogen supply system 100 shown in (B) of Fig. 1 are similar to those shown in (A-1) and (A-2) of Fig. 1, and supply hydrogen and supply electric power in a similar manner to them, except that the former devices are mounted on different transportation vehicles 15, 15a respectively.

Mobile structure 10 may be formed integrally with transportation vehicle 15, and natural energy power generation device 12 provided separately from mobile structure 10 may be formed integrally with transportation vehicle 15, 15a.

Hydrogen supply systems 100 as shown in (A-1) and (A-2) of Fig. 1 and (B) of Fig. 1 enable hydrogen generation device 1 and natural energy power generation device 12 to be moved by one or a plurality of transportation vehicles. Thus, hydrogen supply system 100 enables the entire system to be moved easily.

### [Configuration of Natural Energy Power generation device]

Next, a configuration of natural energy power generation device 12 is described.

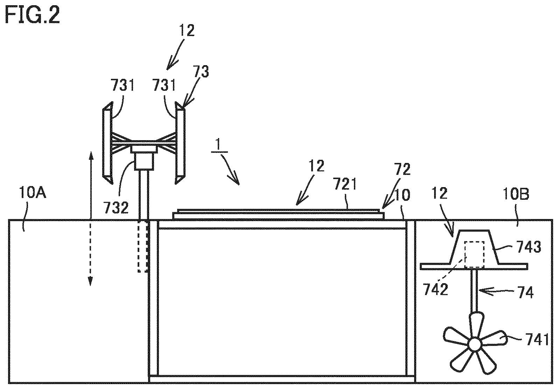

Fig. 2 is a side view of mobile structure 10, showing the configuration of natural energy power generation device 12 according to Embodiment 1 shown in (A-1) of Fig. 1.

Referring to Fig. 2, doors 10A and 10B of the double-door type are provided on a side surface of mobile structure 10. Fig. 2 shows a state in which door 10A and door 10B provided on the side surface of mobile structure 10 are opened.

Above-described generator 11, power storage unit 13, and controller 14 that are included in hydrogen generation device 1, and a part of natural energy power generation device 12 can be housed in mobile structure 10, and can be transported to any place by above-described transportation vehicle 15.

A solar power generation device 72 including a solar battery module 721 is provided on a central portion of the upper surface of mobile structure 10. Solar power generation device 72 generates electric power from sunlight received by solar battery module 721. The electric power generated by solar power generation device 72 is supplied to and stored in power storage unit 13 shown in Fig. 1 via electric cable 92.

A wind power generation device 73 including a wind turbine 731 and an electric generator 732 is provided outside the side wall surface of mobile structure 10. In wind power generation device 73, electric generator 732 generates electric power in response to rotation of wind turbine 731 caused by wind received by the wind turbine. The electric power generated by wind power generation device 73 is supplied to and stored in power storage unit 13 shown in Fig. 1 via electric cable 92. The electric power generated by wind power generation device 73 is supplied to and stored in power storage unit 13 shown in Fig. 1. The position, in the top-bottom direction, of wind power generation device 73 may be changed by a lift device (not shown) as required. For example, when electric power is to be generated by wind power generation device 73, wind power generation device 73 may be placed at an elevated position as shown in Fig. 2 so that wind turbine 731 can receive wind to be rotated and, when electric power is not to be generated by wind power generation device 73 or during transportation, wind turbine 731 may be lowered to a position lower than the height of mobile structure 10 by the lift device. Wind power generation device 73 is attached to the outside of the side wall surface of mobile structure 10, so that wind power generation device 73 is located at a position higher than the height of mobile structure 10 as shown in Fig. 2 and thus set in a state where it can generate electric power, at a destination to which wind power generation device 73 is transported by transportation vehicle 15.

Wind power generation device 73 may be housed inside mobile structure 10. Thus, if wind power generation device 73 can be housed inside mobile structure 10, it is possible to prevent mobile structure 10 from violating rules restricting the packing size during transportation, such as during sea transportation. Since wind power generation device 73 can be housed inside mobile structure 10 during transportation, damage during transportation can be avoided.

An open-and-close door (not shown) may be provided on the upper surface of mobile structure 10 so as to be opened and closed to allow wind turbine 731 to be located outside or inside mobile structure 10. The open-and-close door is opened in a state in which wind turbine 731 is to be lifted or lowered and in a state in which wind turbine 731 protrudes upward from mobile structure 10, and closed in a state in which wind turbine 731 is housed inside mobile structure 10. In such a configuration, wind power generation device 73 can be housed inside mobile structure 10, and is lifted or lowered as required, by a lift device (not shown) provided inside mobile structure 10.

In mobile structure 10, a hydropower generation device 74 is held on an inner wall surface of door 10B. In hydropower generation device 74, a water turbine 741 is provided below a base 743, and an electric generator 742 is provided inside base 743. Electric generator 742 generates electric power based on rotation of water turbine 741. Hydropower generation device 74 is provided so as to be easily detachable from the inner wall surface of door 10B.

In order for water turbine 741 to receive a water flow in any water passage with hydropower generation device 74 removed from the inner wall surface of door 10B, base 743 is erected over the water passage. In hydropower generation device 74, electric generator 742 generates electric power based on rotation of water turbine 741 caused by a water flow received by water turbine 741 in the water passage. The electric power generated by hydropower generation device 74 is supplied to and stored in power storage unit 13 shown in Fig. 1 via electric cable 92. Hydropower generation device 74 may be mounted on a carriage such as a hand-push-type carriage or a self-propelled carriage so as to be housed in mobile structure 10. In this case, hydropower generation device 74 may be transported to a destination in a state of being housed in mobile structure 10 and, when the hydropower generation device reaches the destination, the hydropower generation device may be placed on a carriage, pulled out from the inside of mobile structure 10, and installed at a place where it can generate electric power. Hydropower generation device 74 may be attached to at least one of the outer wall surface and the inner wall surface of door 10A or door 10B.

Natural energy power generation device 12 can generate electric power from natural energy that is at least one of sunlight, wind power, and water power, using at least one of solar power generation device 72, wind power generation device 73, and hydropower generation device 74. Thus, natural energy power generation device 12 can generate electric power in a manner depending on the environment such as weather or terrain at a destination. Natural energy power generation device 12 can also generate electric power by combining all or part of solar power generation device 72, wind power generation device 73, and hydropower generation device 74, depending on the environment. Accordingly, even in an environment in which electric power cannot be supplied, electric power can still be generated within a possible extent.

Solar power generation device 72 can generate electric power even during transportation by exposing solar battery module 721 all the time from the upper portion of the mobile structure during transportation. Accordingly, it is possible to generate electric power by more effectively using natural energy, so that an adequate amount of electric power stored in power storage unit 13 is available.

Natural energy power generation device 12 is provided with a controller (not shown). The controller is configured in a similar manner to controller 14, and controls power generation devices such as solar power generation device 72, wind power generation device 73, and hydropower generation device 74 by executing a program stored in a memory. The controller may be configured as one controller that performs centralized control on solar power generation device 72, wind power generation device 73, and hydropower generation device 74, or may be configured as three controllers that are provided separately for solar power generation device 72, wind power generation device 73, and hydropower generation device 74 respectively.

### [Another Configuration of Mobile Hydrogen Supply System 100]

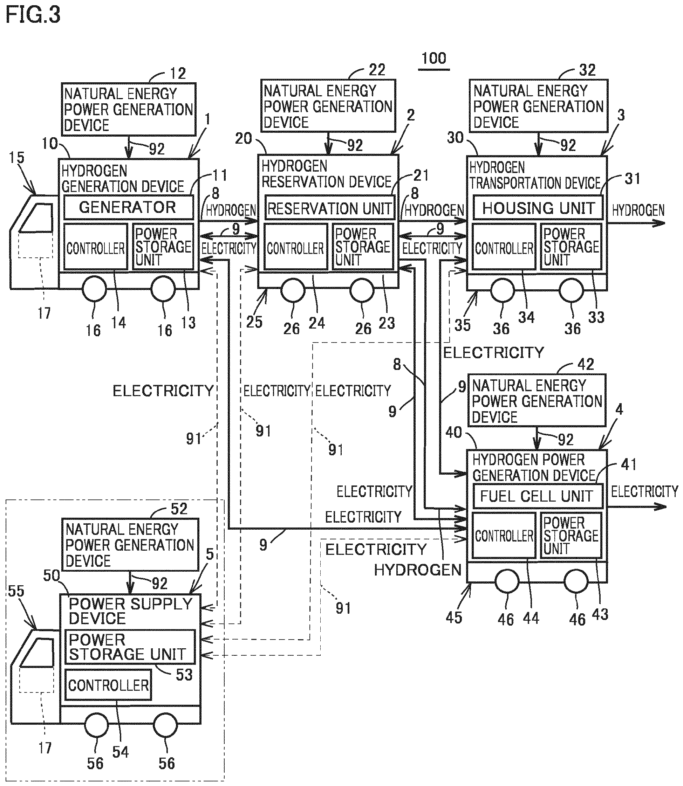

Fig. 3 is a diagram showing another configuration of hydrogen supply system 100 according to Embodiment 1.

Hydrogen supply system 100 shown in Fig. 3 includes a hydrogen reservation device 2, a hydrogen transportation device 3, a hydrogen power generation device 4, and natural energy power generation devices 22, 32, and 42, in addition to hydrogen generation device 1 and natural energy power generation device 12 described above. Hydrogen generation device 1 and natural energy power generation device 12 may have any configuration among respective configurations of (A) of Fig. 1, (B) of Fig. 1, and (C) of Fig. 1. Fig. 3 shows, as a representative example, hydrogen generation device 1 and natural energy power generation device 12 having the configuration shown in (A) of Fig. 1.

Hydrogen reservation device 2 is provided inside a mobile structure 20. Hydrogen transportation device 3 is provided inside a mobile structure 30. Hydrogen power generation device 4 is provided inside a mobile structure 40. Mobile structures 10, 20, 30, and 40 are each a box-shaped body.

Hydrogen reservation device 2 is a device that reserves hydrogen generated by hydrogen generation device 1. Hydrogen transportation device 3 is a device that transports a cartridge which is a container in which hydrogen reserved in hydrogen reservation device 2 is enclosed and which is housed in the hydrogen transportation device. Such a cartridge is referred to as hydrogen cartridge. Hydrogen power generation device 4 is a device that generates electric power using, as a fuel, hydrogen stored in hydrogen reservation device 2.

Like hydrogen generation device 1, hydrogen reservation device 2, hydrogen transportation device 3, and hydrogen power generation device 4 are mounted respectively on transportation vehicle 25, 35, and 45, in such a manner that they are attachable to and detachable from respective transportation vehicles. Transportation vehicles 25, 35, and 45 have a plurality of wheels 26, a plurality of wheels 36, and a plurality of wheels 46, respectively, and have respective configurations similar to that of transportation vehicle 15. Like hydrogen generation device 1, hydrogen reservation device 2, hydrogen transportation device 3, and hydrogen power generation device 4 may be fixedly mounted on respective transportation vehicles 25, 35, and 45.

Hydrogen reservation device 2 includes mobile structure 20, a reservation unit 21, a power storage unit 23, and a controller 24. Natural energy power generation device 22 is configured similarly to natural energy power generation device 12. Natural energy power generation device 22 is mounted outside or inside mobile structure 20. Power storage unit 23 includes a storage battery, and stores electric power generated by natural energy power generation device 22.

Reservation unit 21 can be connected to generator 11 of hydrogen generation device 1 by pipe 8. Pipe 8 is housed in hydrogen reservation device 2 or another device when pipe 8 is not used, for example, during transportation of hydrogen reservation device 2. When reservation unit 21 is connected to generator 11 through pipe 8, hydrogen generated by generator 11 is supplied through pipe 8. Reservation unit 21 is operated on electric power stored in power storage unit 23, and reserves hydrogen supplied from generator 11. Reservation unit 21 has a function of adjusting the temperature of the reserved hydrogen. Reservation unit 21 may also have a function of changing the pressure of the reserved hydrogen.

Controller 24 is a device operated on electric power stored in power storage unit 23 to control hydrogen reservation device 2, and is configured similarly to controller 14. A CPU of controller 24 performs control of each device in hydrogen reservation device 2, including control related to reservation of hydrogen, such as reservation temperature control in reservation unit 21, and control related to power storage in and power discharge from power storage unit 23, for example.

Hydrogen transportation device 3 includes mobile structure 30, a housing unit 31, a power storage unit 33, and a controller 34. Natural energy power generation device 32 is configured similarly to natural energy power generation device 12, and is a device that generates electric power from natural energy. Natural energy power generation device 32 is mounted on mobile structure 30. Power storage unit 33 includes a storage battery, and stores electric power generated by natural energy power generation device 32.

Housing unit 31 can be connected to reservation unit 21 of hydrogen reservation device 2 by pipe 8. Pipe 8 is housed in hydrogen transportation device 3 or another device when pipe 8 is not used, for example, during transportation of hydrogen transportation device 3. When housing unit 31 is connected to reservation unit 21, hydrogen reserved in reservation unit 21 is supplied through pipe 8. Housing unit 31 is operated on electric power stored in power storage unit 33, and houses a plurality of cartridges in which hydrogen supplied from reservation unit 21 is enclosed.

Controller 34 is a device operated on electric power stored in power storage unit 33 to control hydrogen transportation device 3, and is configured similarly to controller 14. A CPU of controller 34 performs control of each device in hydrogen transportation device 3, including control related to accommodation of hydrogen, such as temperature control in housing unit 31, control related to enclosure of hydrogen in the cartridge housed in housing unit 31, and control related to power storage in and power discharge from power storage unit 33.

Hydrogen power generation device 4 includes mobile structure 40, a fuel cell unit 41, a power storage unit 43, and a controller 44. Natural energy power generation device 42 is configured similarly to natural energy power generation device 12. Natural energy power generation device 42 is mounted on mobile structure 40. Power storage unit 43 includes a storage battery, and stores electric power generated by natural energy power generation device 42.

Fuel cell unit 41 can be connected to reservation unit 21 of hydrogen reservation device 2 by pipe 8. Pipe 8 is housed in hydrogen power generation device 4 or another device when pipe 8 is not used, for example, during transportation of hydrogen power generation device 4. When fuel cell unit 41 is connected to reservation unit 21 through pipe 8, hydrogen reserved in reservation unit 21 is supplied through pipe 8. Fuel cell unit 41 is operated on electric power stored in the power storage unit 43, and generates electric power using, as a fuel, hydrogen supplied from reservation unit 21. Electric power generated by fuel cell unit 41 is supplied to the outside of hydrogen power generation device 4.

Controller 44 is a device operated on electric power stored in power storage unit 43 to control hydrogen power generation device 4, and is configured similarly to controller 14. A CPU of controller 44 performs control of each device in hydrogen power generation device 4, including control related to power generation in fuel cell unit 41 and control related to power storage in and discharge from power storage unit 43.

In hydrogen supply system 100 of Fig. 3, power storage unit 13, power storage unit 23, power storage unit 33, and power storage unit 43 of respective hydrogen generation device 1, hydrogen reservation device 2, hydrogen transportation device 3, and hydrogen power generation device 4 can be connected to each other by electric cable 9, to transmit and receive the stored electric power. Control of such power transmission and power reception is performed by controller 14, controller 24, controller 34, and controller 44. Accordingly, any power storage unit having a shortage of stored electric power is replenished with electric power from any of other power storage units, which can stabilize operation of hydrogen supply system 100.

In hydrogen supply system 100, hydrogen generation device 1, hydrogen reservation device 2, hydrogen transportation device 3, and hydrogen power generation device 4 are transported individually, so that respective devices of the system can easily be moved separately.

Moreover, for each of natural energy power generation devices 12, 22, 32, and 42, electric power can be generated by a plurality of power generation devices using different types of natural energies, and therefore, the amount of electric power supplied to associated power storage unit 13, 23, 33, or 43 can be adjusted by changing the number of power generation devices used for generating electric power.

### [Transportation of Mobile Hydrogen Supply System 100]

During transportation of hydrogen generation device 1, hydrogen reservation device 2, hydrogen transportation device 3, and hydrogen power generation device 4, it is possible to generate electric power by respective natural energy power generation devices 12, 22, 32, and 42 using a solar power generation device such as solar power generation device 72, and store the electric power in respective power storage units 13, 23, 33, and 43.

During transportation of hydrogen generation device 1, hydrogen reservation device 2, hydrogen transportation device 3, and hydrogen power generation device 4, it is possible to generate electric power by respective natural energy power generation devices 12, 22, 32, and 42 using a wind power generation device such as wind power generation device 73.

Hydrogen supply system 100 is configured, as a system that generates and supplies hydrogen to the outside, by combining at least hydrogen generation device 1 and natural energy power generation device 12. Hydrogen supply system 100 may also be configured by combination hydrogen generation device 1 and natural energy power generation device 12, with hydrogen reservation device 2. Hydrogen supply system 100 may also be a system configured by combining hydrogen generation device 1, natural energy power generation device 12, and hydrogen reservation device 2, with hydrogen transportation device 3 or hydrogen power generation device 4.

Hydrogen supply system 100 may also be a system configured by combining hydrogen generation device 1 and natural energy power generation device 12 with one or both of hydrogen transportation device 3 and hydrogen power generation device 4.

### [Example of Basic Arrangement of Mobile Hydrogen Supply System 100 after Transported]

After hydrogen supply system 100 is transported to a destination, hydrogen generation device 1, hydrogen reservation device 2, hydrogen transportation device 3, and hydrogen power generation device 4 are arranged either in a gathered state or a dispersed state, and these devices are connected to each other by means of pipe 8 and electric cable 9. Thus, hydrogen supply system 100 can be actuated.

Such a basic arrangement of hydrogen supply system 100 is implemented when a hydrogen-demanding place to which hydrogen in a cartridge is to be supplied from hydrogen transportation device 3, an electric-power-demanding place to which electric power is to be supplied from hydrogen power generation device 4, and a hydrogen generation place where hydrogen generation device 1 can stably generate hydrogen thanks to an environmental factor such as natural energy coincide with each other.

### [Example of Separation Arrangement of Mobile Hydrogen Supply System 100 after Transported]

Next, an example is described in which at least some of hydrogen generation device 1, hydrogen reservation device 2, hydrogen transportation device 3, and hydrogen power generation device 4 that constitute hydrogen supply system 100 is arranged separately from other devices.

In hydrogen supply system 100, when at least some of a hydrogen-demanding place to which hydrogen is to be supplied from hydrogen transportation device 3, an electric-power-demanding place to which electric power is to be supplied from hydrogen power generation device 4, and a hydrogen generation place where hydrogen generation device 1 can stably generate hydrogen thanks to an environmental factor is not coincide with the other places, at least some of the devices is arranged separately from the other devices.

Thus, in hydrogen supply system 100, at least some of the devices is arranged separately from the other devices so that they are placed at a plurality of different locations, which makes it possible to stabilize generation of hydrogen by hydrogen generation device 1 and to stabilize supply of hydrogen by hydrogen transportation device 3 and supply of electric power by hydrogen power generation device 4.

In hydrogen supply system 100, hydrogen generation device 1 having been transported is operable on electric power generated from natural energy by natural energy power generation device 12 having been transported. Thus, when hydrogen generation device 1 is to supply hydrogen, hydrogen supply system 100 can ensure an energy source available at a hydrogen-demanding place to which hydrogen supply system 100 has been transported.

As shown in Fig. 3 for example, for hydrogen reservation device 2, hydrogen transportation device 3, and hydrogen power generation device 4, natural energy power generation devices 22, 32, and 42 are also mounted on respective devices. Thus, when hydrogen is to be supplied, hydrogen supply system 100 can ensure an energy source available at a hydrogen-demanding place to which hydrogen supply system 100 has been transported.

On hydrogen generation device 1, hydrogen reservation device 2, hydrogen transportation device 3, and hydrogen power generation device 4, respective natural energy power generation devices 12, 22, 32, and 42 are mounted, which facilitates transportation of hydrogen reservation device 2, hydrogen transportation device 3, and hydrogen power generation device 4 as well as respective natural energy power generation devices 12, 22, 32, and 42.

Hydrogen supply system 100 shown in Fig. 3 enables hydrogen generation device 1 to be placed at a location where it is easy for natural energy power generation device 12 to generate electric power from natural energy, which makes it possible to ensure an energy source regardless of a natural environment such as weather conditions at a hydrogen-demanding place and regardless of a social environment such as whether an energy source is present or not. Hydrogen generation device 1 and hydrogen reservation device 2 can be arranged at separate locations, which makes it easy to find a location where hydrogen supply system 100 is to be installed, as compared with the case where these devices are integrated into a single unit. Accordingly, it is possible to make it less likely that hydrogen supply system 100 is affected by the environment such as the size of the place where the transported system is installed.

The devices included in hydrogen supply system 100 can be transported individually, and therefore, hydrogen supply system 100 can be transported on a road in bad condition, which makes it possible to easily move hydrogen supply system 100 to a demanding place where few roads in good condition are available, such as a place suffering from natural disaster.

The devices included in hydrogen supply system 100 shown in Fig. 3 can be transported individually, and therefore, hydrogen generation device 1 can be installed at a place where hydrogen is easily generated, hydrogen reservation device 2 can be installed at a place where hydrogen is easily reserved, hydrogen transportation device 3 can be installed at a place to which hydrogen is easily transported, and hydrogen power generation device 4 can be installed at a place where electric power is easily generated.

The devices included in hydrogen supply system 100 shown in Fig. 3 can be transported individually, and therefore, hydrogen supply system 100 can be organized into a system in which the devices are combined depending on what is demanded at the place to which the system is to be transported.

### [Hydrogen Supply System 100 Including Power Supply Device]

Hydrogen supply system 100 may further include a power supply device 5 enclosed by a two-dot chain line in Fig. 3.

Power supply device 5 is provided inside a mobile structure 50. Mobile structure 50 is a mobile structure similar to mobile structure 10. Power supply device 5 is a device capable of externally supplying electric power to hydrogen generation device 1, hydrogen reservation device 2, hydrogen transportation device 3, and hydrogen power generation device 4.

Power supply device 5 is mounted on a transportation vehicle 55 in such a manner that the power supply device is attachable to and detachable from the transportation vehicle. Transportation vehicle 55 has a plurality of wheels 56 and has a configuration similar to that of transportation vehicle 15. Like hydrogen generation device 1, power supply device 5 may be fixedly mounted on associated transportation vehicle 55.

Power supply device 5 includes mobile structure 50, a power storage unit 53, and a controller 54. A natural energy power generation device 52 is configured similarly to natural energy power generation device 12 shown in Fig. 2. Natural energy power generation device 52 is mounted on mobile structure 50. Power storage unit 53 includes a storage battery, and stores electric power generated by natural energy power generation device 52.

Power storage unit 53 includes a storage battery having a larger capacity than storage batteries of power storage units 13, 23, 33, and 43. Power storage unit 53 may include a storage battery having a capacity similar to that of the storage batteries of power storage units 13, 23, 33, and 43.

Controller 54 is a device operated on electric power stored in power storage unit 53 to control power supply device 5, and is configured similarly to controller 14 shown in Fig. 3. A CPU of controller 54 performs control of each device in power supply device 5, such as control related to power storage in and power discharge from power storage unit 53.

In hydrogen supply system 100 including power supply device 5, power storage unit 53 of power supply device 5 can be connected to each of power storage unit 13 of hydrogen generation device 1, power storage unit 23 of hydrogen reservation device 2, power storage unit 33 of hydrogen transportation device 3, and power storage unit 43 of hydrogen power generation device 4 by an electric cable 91 to transmit electric power stored in power storage unit 53. Control of such power transmission is performed by controller 54.

Hydrogen supply system 100 including power supply device 5 provides the following effect, in addition to the effects provided by hydrogen supply system 100 that does not include power supply device 5. Each of power storage unit 13 of hydrogen generation device 1, power storage unit 23 of hydrogen reservation device 2, power storage unit 33 of hydrogen transportation device 3, and power storage unit 43 of hydrogen power generation device 4 can be supplied with electric power from power storage unit 53 of power supply device 5, and therefore, any power storage unit having a shortage of stored electric power can be replenished with electric power, which can stabilize operation of hydrogen supply system 100.

### <Embodiment 2>

### [Configuration of Mobile Hydrogen Supply System 101]

In connection with Embodiment 2, an example is illustrated where hydrogen generation device 1 and hydrogen reservation device 2 are mounted on one transportation vehicle 15c. Natural energy power generation device 12 is mounted outside or inside mobile structure 10 of hydrogen generation device 1.

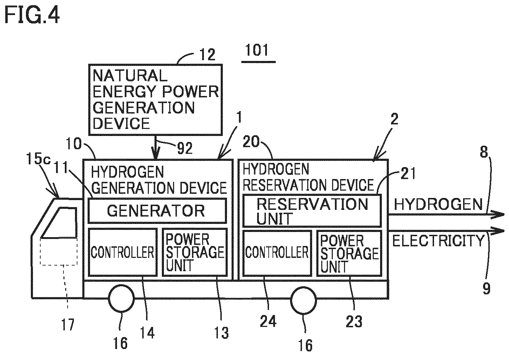

Fig. 4 is a diagram showing a configuration of a mobile hydrogen supply system 101 according to Embodiment 2. The configuration of hydrogen supply system 101 is different from that of hydrogen supply system 100 of Embodiment 1 in that hydrogen generation device 1 and hydrogen reservation device 2 are mounted on one transportation vehicle 15c in such a manner that they are attachable to and detachable from the transportation vehicle.

As shown in Fig. 4, hydrogen supply system 101 includes at least hydrogen generation device 1, natural energy power generation device 12, and hydrogen reservation device 2.

Transportation vehicle 15c has a configuration similar to that of transportation vehicle 15. Hydrogen generation device 1 and hydrogen reservation device 2 may be fixedly mounted on transportation vehicle 15c.

Hydrogen supply system 101 includes at least hydrogen generation device 1, natural energy power generation device 12, and hydrogen reservation device 2. Natural energy power generation device 12 is mounted outside or inside mobile structure 10 of hydrogen generation device 1.

With such a configuration, hydrogen supply system 101 shown in Fig. 4 enables transportation of hydrogen generation device 1 and hydrogen reservation device 2 to a destination by one transportation vehicle 15c.

At a destination, in hydrogen supply system 101 shown in Fig. 4, hydrogen generation device 1 still mounted on transportation vehicle 15c or having been unloaded from transportation vehicle 15c, and hydrogen reservation device 2 still mounted on transportation vehicle 15c or having been unloaded from transportation vehicle 15c can be connected to each other by pipe 8 and electric cable 9.

Hydrogen reservation device 2 is not equipped with a natural energy power generation device. Electric power stored in power storage unit 13 of hydrogen generation device 1 is supplied to power storage unit 23 of hydrogen reservation device 2 through electric cable 9. Hydrogen reservation device 2 stores, in power storage unit 23, electric power supplied from power storage unit 13, and is operated on the stored electric power.

Thus, the configuration of hydrogen supply system 101 in which some of the devices is equipped with the natural energy power generation device enables reduction of the number of natural energy power generation devices included in hydrogen supply system 101, to thereby enable reduction of the number of devices included in the system. In addition, as some of the devices is equipped with the natural energy power generation device, the configuration of the system can be simplified.

Natural energy power generation device 12 may be provided separately from hydrogen generation device 1 as shown in (B) of Fig. 1, so that the natural energy power generation device can be mounted and transported on a transportation vehicle different from transportation vehicle 15c. As shown in (A-2) of Fig. 1, natural energy power generation device 12, hydrogen generation device 1, and hydrogen reservation device 2 may be separately mounted on and transported by one transportation vehicle 15c.

### [Other Configurations of Hydrogen Supply System 101]

Hydrogen supply system 101 shown in Fig. 4 may include, in addition to hydrogen generation device 1 and hydrogen reservation device 2, transportable hydrogen transportation device 3 and hydrogen power generation device 4, like the configuration shown in Fig. 3. Hydrogen supply system 101 shown in Fig. 4 may further include power supply device 5 enclosed by the two-dot chain line in Fig. 3.

In hydrogen supply system 101, any two or three of hydrogen transportation device 3, hydrogen power generation device 4, and power supply device 5 may be mounted on one transportation vehicle.

In Embodiment 2, as shown in Fig. 4, a plurality of devices, i.e., hydrogen generation device 1 and hydrogen reservation device 2 operated on electric power generated by natural energy power generation device 12 can be transported together by one transportation vehicle 15c, which can facilitate transportation of hydrogen supply system 101.

### <Embodiment 3>

### [Overall Configuration of Mobile Hydrogen Supply System 102]

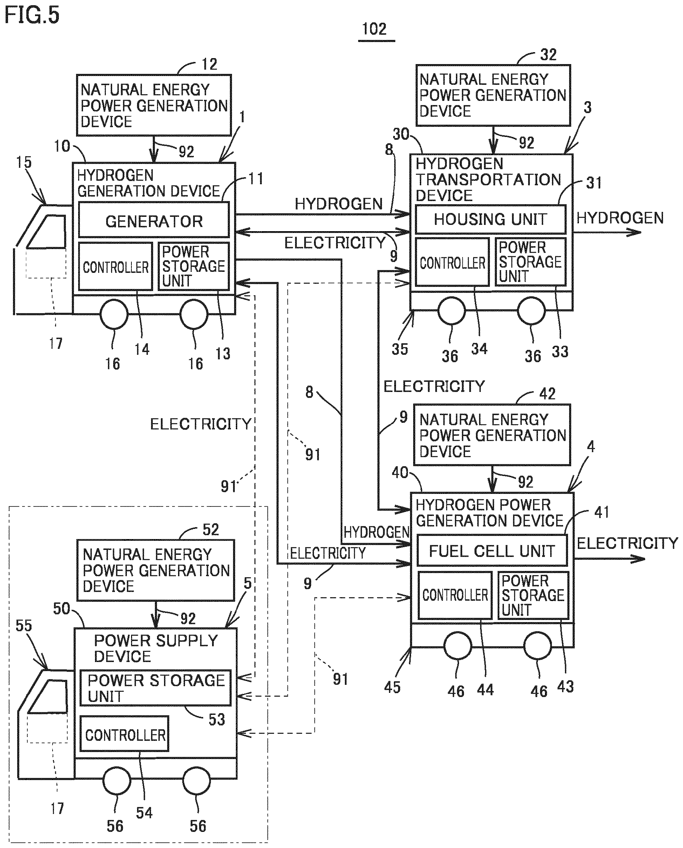

Fig. 5 is a diagram showing a configuration of a hydrogen supply system 102 according to Embodiment 3. In connection with Embodiment 3, hydrogen supply system 102 that does not include hydrogen reservation device 2 is described.

Hydrogen supply system 102 of Fig. 5 differs from hydrogen supply systems 100 and 101 shown in Figs. 1 to 4 in that the former does not include hydrogen reservation device 2.

Hydrogen supply system 102 of Fig. 5 includes hydrogen generation device 1, hydrogen transportation device 3, and hydrogen power generation device 4. On hydrogen generation device 1, hydrogen transportation device 3, and hydrogen power generation device 4, respective natural energy power generation devices 12, 32, and 42 are mounted.

### [Example Connection of Mobile Hydrogen Supply System 102 after Transported]

In hydrogen supply system 102 located at a destination, connection is made in the following manner, for example. Hydrogen generation device 1 and hydrogen transportation device 3 are connected to each other by means of pipe 8 and electric cable 9. Hydrogen generation device 1 and hydrogen power generation device 4 are connected to each other by means of pipe 8 and electric cable 9. Hydrogen transportation device 3 and hydrogen power generation device 4 are connected to each other by means of electric cable 9.

In hydrogen transportation device 3, housing unit 31 can be connected to generator 11 of hydrogen generation device 1 by pipe 8. Housing unit 31 connected to generator 11 by pipe 8 is supplied with hydrogen generated by generator 11 through pipe 8, and encloses and houses the hydrogen in a plurality of cartridges.

In hydrogen power generation device 4, fuel cell unit 41 can be connected to generator 11 of hydrogen generation device 1 by pipe 8. Fuel cell unit 41 connected to generator 11 by pipe 8 is supplied with hydrogen generated by generator 11 through pipe 8, and generates electric power using the hydrogen as a fuel.

In hydrogen supply system 102 of Fig. 5, power storage unit 13, power storage unit 33, and power storage unit 43 of respective hydrogen generation device 1, hydrogen transportation device 3, and hydrogen power generation device 4 can be connected to each other by electric cable 9, to transmit and receive the stored electric power.

In Embodiment 3, hydrogen supply system 102 does not include the hydrogen reservation device, which enables reduction of the number of devices included in the system, to thereby simplify the configuration of the system.

### [Hydrogen Supply System 102 Including Power Supply Device]

Hydrogen supply system 102 may further include power supply device 5 enclosed by a two-dot chain line in Fig. 5. Power supply device 5 has functions similar to the functions described in connection with Embodiment 1.

In hydrogen supply system 102 including power supply device 5, power storage unit 53 of power supply device 5 can be connected to power storage units 13, 33, and 43 of respective hydrogen generation device 1, hydrogen transportation device 3, and hydrogen power generation device 4 by electric cable 91, to transmit electric power stored in power storage unit 53.

In addition to the effects provided by hydrogen supply system 102 that does not include power supply device 5, hydrogen supply system 102 including power supply device 5 provides the effect that any power storage unit having a shortage of stored electric power can be replenished with electric power from power supply device 5, which can stabilize operation of hydrogen supply system 102.

### <Embodiment 4>

### [Overall Configuration of Mobile Hydrogen Supply System 103]

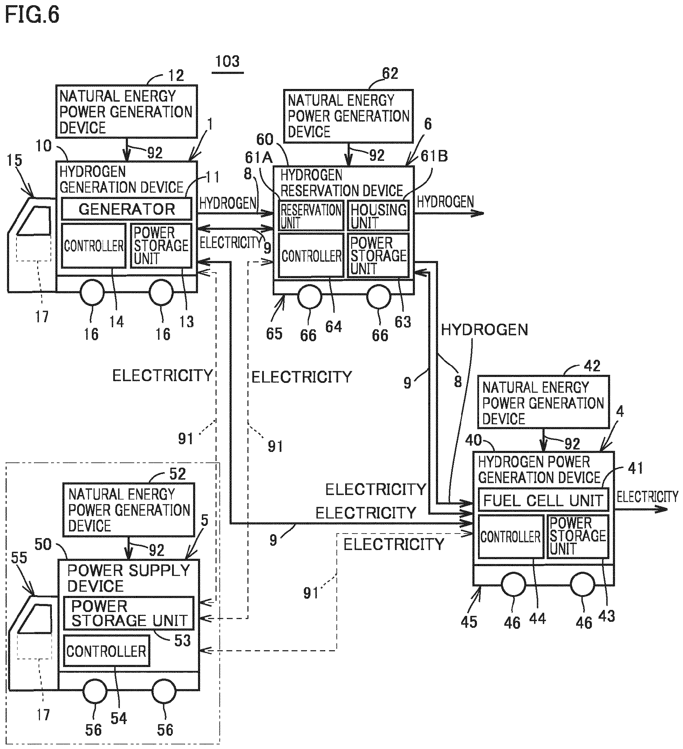

Fig. 6 is a diagram showing a configuration of a hydrogen supply system 103 according to Embodiment 4. Hydrogen supply system 103 is different from hydrogen supply system 100 of Embodiment 1 in that the former is provided with a hydrogen reservation device 6 having a function of storing hydrogen and a function of transporting hydrogen, instead of hydrogen reservation device 2 and hydrogen transportation device 3.

Hydrogen reservation device 6 is provided inside a mobile structure 60. Hydrogen reservation device 6 reserves hydrogen generated by hydrogen generation device 1, and encloses and transports the reserved hydrogen in a cartridge.

Hydrogen reservation device 6 is mounted on a transportation vehicle 65 in such a manner that the hydrogen reservation device is attachable to and detachable from the transportation vehicle. Transportation vehicle 65 has a plurality of wheels 66 and has a configuration similar to that of transportation vehicle 15. Hydrogen reservation device 6 may be fixedly mounted on associated transportation vehicle 65.

Hydrogen reservation device 6 includes mobile structure 60, a reservation unit 61A, a housing unit 61B, a power storage unit 63, and a controller 64. A natural energy power generation device 62 is configured similarly to natural energy power generation device 12. Natural energy power generation device 62 is mounted on mobile structure 60. Power storage unit 63 includes a storage battery, and stores electric power generated by natural energy power generation device 62.

Reservation unit 61A can be connected to generator 11 of hydrogen generation device 1 by pipe 8. Pipe 8 is housed in hydrogen reservation device 6 or another device when pipe 8 is not used, for example, during transportation of hydrogen reservation device 6. When reservation unit 61A is connected to generator 11 by pipe 8, it is supplied with hydrogen generated by generator 11 through pipe 8. Reservation unit 61A is operated on electric power stored in power storage unit 63, and reserves hydrogen supplied from generator 11.

Housing unit 61B is supplied, through pipe 8, with hydrogen stored in reservation unit 61A. Housing unit 61B is operated on electric power stored in power storage unit 63 to house hydrogen supplied from reservation unit 61A and enclosed in a plurality of hydrogen cartridges.

Controller 64 is a device operated on electric power stored in power storage unit 63 to control hydrogen reservation device 6, and is configured similarly to controller 14. A CPU of controller 64 performs control of each device in hydrogen reservation device 6, including control related to reservation of hydrogen, such as storage temperature control in reservation unit 61A, control related to accommodation of hydrogen, such as temperature control in housing unit 61B, and control related to power storage in and power discharge from power storage unit 63.

In hydrogen generation device 1, hydrogen reservation device 6, and hydrogen power generation device 4 of hydrogen supply system 103, like hydrogen supply system 100 for example, any power storage unit having a shortage of stored electric power can be replenished with electric power from any of other power storage units, which can stabilize operation of hydrogen supply system 103.

### [Example of Basic Arrangement of Mobile Hydrogen Supply System 103 after Transported]

After hydrogen supply system 103 is transported to a destination, hydrogen generation device 1, hydrogen reservation device 6, and hydrogen power generation device 4 are arranged either in a gathered state or a dispersed state, and these devices are connected to each other by means of pipe 8 and electric cable 9. Thus, hydrogen supply system 103 can be actuated.

### [Example Transportation of Hydrogen Reservation Device 6 of Hydrogen Supply System 103 after Installed]

In hydrogen supply system 103, hydrogen reservation device 6 has a function of reserving hydrogen and a function of transporting hydrogen. Hydrogen reservation device 6 is installed in the vicinity of hydrogen generation device 1, and reserves hydrogen supplied from hydrogen generation device 1 in reservation unit 61A. When a place where hydrogen generation device 1 is installed and a hydrogen-demanding place are located away from each other, hydrogen reservation device 6 is disconnected from hydrogen generation device 1 as required and transported to the hydrogen-demanding place by transportation vehicle 65, to supply a hydrogen cartridge accommodated in housing unit 61B to the hydrogen-demanding place.

Hydrogen supply system 103 of Embodiment 4 provides the following effect, in addition to the effects provided by hydrogen supply system 100 of Embodiment 1. Hydrogen reservation device 6 has a function of reserving hydrogen and a function of enclosing hydrogen in a hydrogen cartridge and transporting the hydrogen contained in the cartridge, which enables reduction of the number of devices constituting hydrogen supply system 103, as compared with hydrogen supply system 100.

### [Hydrogen Supply System 103 Including Power Supply Device]

Hydrogen supply system 103 may further include power supply device 5 enclosed by a two-dot chain line in Fig. 6. Power supply device 5 has functions similar to the functions described in connection with Embodiment 1.

In hydrogen supply system 103 including power supply device 5, power storage unit 53 of power supply device 5 can be connected to each of power storage unit 13 of hydrogen generation device 1, power storage unit 63 of hydrogen reservation device 6, and power storage unit 43 of the hydrogen power generation device 4 by electric cable 91, to transmit electric power stored in power storage unit 53.

In addition to the effects provided by hydrogen supply system 103 that does not include power supply device 5, hydrogen supply system 103 including power supply device 5 provides an effect that any power storage unit having a shortage of stored electric power can be replenished with electric power from power supply device 5, which can stabilize operation of hydrogen supply system 103.

### <Embodiment 5>

### [Overall Configuration of Mobile Hydrogen Supply System 104]

In connection with Embodiment 5, an example is described in which some of a plurality of devices included in the hydrogen supply system is provided with a natural energy power generation device. In connection with Embodiment 5, a hydrogen supply system 104 is described, as a representative example, corresponding to hydrogen supply system 100 of Embodiment 1 shown in Fig. 3, and including natural energy power generation devices provided to some devices of the system.

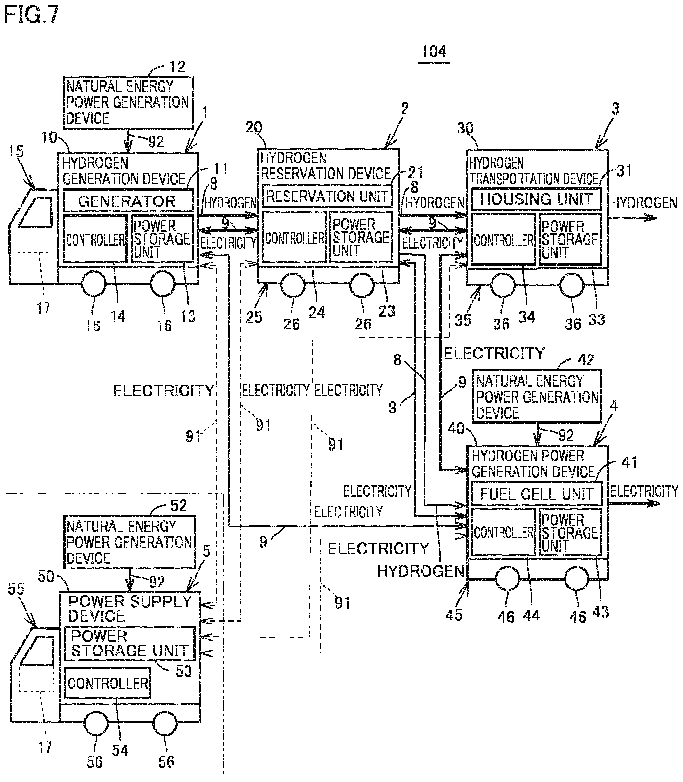

Fig. 7 is a diagram showing a configuration of hydrogen supply system 104 according to Embodiment 5. The configuration of hydrogen supply system 104 of Embodiment 5 is different from that of hydrogen supply system 100 shown in Fig. 3 in that some of hydrogen generation device 1, hydrogen reservation device 2, hydrogen transportation device 3, hydrogen power generation device 4, and power supply device 5 is/are provided with a natural energy power generation device(s).

In hydrogen supply system 104 of Embodiment 5, hydrogen generation device 1, hydrogen power generation device 4, and power supply device 5 are provided respectively with natural energy power generation devices 12, 42, and 52. In contrast, hydrogen reservation device 2 and hydrogen transportation device 3 are not provided with respective natural energy power generation devices.

In the example of Fig. 7, hydrogen reservation device 2 and hydrogen transportation device 3 can be supplied with electric power stored in power storage unit 13 of hydrogen generation device 1, power storage unit 43 of hydrogen power generation device 4, and power storage unit 53 of power supply device 5, in which electric power generated from natural energy is stored. Thus, electric power is stored in power storage unit 23 of hydrogen reservation device 2 and power storage unit 33 of hydrogen transportation device 3.

In hydrogen supply system 104 in which some device(s) is/are equipped with a natural energy power generation device(s), at least one device may be equipped with a natural energy power generation device, for example, only hydrogen generation device 1 may be equipped with natural energy power generation device 12.

The device equipped with the natural energy power generation device is not limited to those illustrated in the example of Fig. 7, but may be any of the devices, i.e., hydrogen generation device 1, hydrogen reservation device 2, hydrogen transportation device 3, hydrogen power generation device 4, and power supply device 5.

In hydrogen supply system 104, some of hydrogen generation device 1, hydrogen reservation device 2, hydrogen transportation device 3, hydrogen power generation device 4, and power supply device 5 is/are provided with a natural energy power generation device(s), so that the number of natural energy power generation devices included in hydrogen supply system 104 can be reduced, and thereby the number of devices included in the system can be reduced. In addition, the configuration of the system can be simplified by providing some of the devices with the natural energy power generation device(s).

The configuration in which some of the different types of devices included in the hydrogen supply system is/are equipped with a natural energy power generation device(s) as shown in Fig. 7, may be applied to all of the above-described hydrogen supply systems 100, 101, 102, and 103.

Hydrogen supply systems 100, 101, 102, 103, and 104 illustrated in connection with Embodiment 1 to Embodiment 5 may have a configuration that enables hydrogen generation device 1 and the natural energy power generation device to be transported, and may have a configuration including at least one transportable device among hydrogen reservation device 2, 6, hydrogen transportation device 3, hydrogen power generation device 4, and power supply device 5. Accordingly, in addition to generation of hydrogen, at least one of reservation of generated hydrogen, transportation of generated hydrogen, power generation using generated hydrogen as a fuel, and supply of electric power to devices included in the system, can be performed by the transported device(s).

### <Modifications of Embodiments>

(1) Transportation vehicles 15, 15a, 15c, 25, 35, 45, 55, and 65 may each be an electric vehicle driven by electricity.
(2) Solar power generation device 72 may be configured in such a manner that the direction in which a light receiving surface of solar battery module 721 is oriented is changed appropriately for the direction in which solar light is applied, to thereby enable optimum power generation.
(3) Hydrogen generation device 1, hydrogen reservation devices 2, 6, hydrogen transportation device 3, hydrogen power generation device 4, and power supply device 5 may not be mounted on respective transportation vehicles, but may be mounted on respective carriages to be towed by respective transportation vehicles.
(4) In natural energy power generation devices 12, 22, 32, 42, 52, and 62, different types of power generation devices may all be movable. For example, in above-described natural energy power generation devices 12, 22, 32, 42, 52, and 62, solar power generation device 72 may be movable to be located outside or inside. Such a configuration includes a configuration in which a solar panel is merely detached during transportation.
(5) Mobile structures 10, 20, 30, 40, 50, and 60 may have a configuration similar to or different from a general-purpose container.
(6) Various devices such as hydrogen generation device 1, natural energy power generation device 12, hydrogen reservation devices 2, 6, hydrogen power generation device 4, and power supply device 5 each may include, as its component, a transportation vehicle on which the device is mounted, or may be fixedly attached to a transportation vehicle on which the device is mounted.
(7) Each of natural energy power generation devices 12, 22, 62, 32, 42, 52, and 62 may be provided with a power storage device.

In such a configuration, when natural energy power generation device 12, 22, 62, 32, 42, 52, 62 is transported on a different transportation vehicle from a transportation vehicle for transporting an associated device such as hydrogen generation device 1, hydrogen reservation device 2, 6, hydrogen transportation device 3, hydrogen power generation device 4, and power supply device 5, like the transportation method in (B) of Fig. 1, for example, electric power is generated by the natural energy power generation device transported to a place where conditions for power generation such as wind conditions, solar irradiation, and moisture are suitable, and the electric power is stored in the power storage device. Then, the natural energy power generation device in which electric power is stored is transported to the place where the hydrogen supply system including hydrogen generation device 1 is installed, so that electric power can be supplied form the natural energy power generation device to each device included in the hydrogen supply system.

In the configuration in which natural energy power generation devices 12, 22, 62, 32, 42, 52, 62 are equipped with respective power storage devices, when natural energy power generation device 12, 22, 62, 32, 42, 52, 62 and an associated device such as hydrogen generation device 1, hydrogen reservation device 2, 6, hydrogen transportation device 3, hydrogen power generation device 4, and power supply device 5, are transported by one transportation vehicle, like the transportation method in (A-1) and (A-2) of Fig. 1, for example, electric power in the power storage device of the natural energy power generation device and the electric power in the power storage unit of the associated device may be shared.

It should be construed that the embodiments and examples disclosed herein are given by way of illustration in all respects, not by way of limitation. It is intended that the scope of the present invention is defined by claims, not by the description above, and encompasses all modifications and variations equivalent in meaning and scope to the claims.

### REFERENCE SIGNS LIST

100, 102, 103, 104 hydrogen supply system; 12, 22, 32, 42, 52, 62 natural energy power generation device; 1 hydrogen generation device; 2, 6 hydrogen reservation device; 4 hydrogen power generation device; 3 hydrogen transportation device; 5 power supply device; 73 wind power generation device; 72 solar power generation device; 74 hydropower generation device; 15, 15a, 15c, 25, 35, 45, 55, 65 transportation vehicle.

## Claims

1. A mobile hydrogen supply system comprising:
a power generation device that generates electric power from natural energy; and
a hydrogen generation device that generates hydrogen, wherein
the hydrogen generation device is operable on electric power generated by the power generation device, and
the power generation device and the hydrogen generation device are transportable.

2. The mobile hydrogen supply system according to claim 1, further comprising at least one of:
a hydrogen reservation device that is operable on electric power generated by the power generation device, and reserves hydrogen generated by the hydrogen generation device;
a hydrogen power generation device that is operable on electric power generated by the power generation device, and generates electric power using, as a fuel, hydrogen generated by the hydrogen generation device; and
a hydrogen transportation device that is operable on electric power generated by the power generation device, and transports hydrogen generated by the hydrogen generation device and enclosed in a container, wherein
the hydrogen reservation device, the hydrogen power generation device, and the hydrogen transportation device are transportable.

3. The mobile hydrogen supply system according to claim 2, wherein a plurality of devices operated on electric power generated by the power generation device are configured to transmit and receive electric power to and from each other.

4. The mobile hydrogen supply system according to any one of claims 1 to 3, further comprising a power supply device stores electric power generated by the power generation device, and supplies electric power stored in the power supply device to any of devices operated on electric power generated by the power generation device, wherein
the power supply device is transportable.

5. The mobile hydrogen supply system according to any one of claims 1 to 4, wherein the power generation device is mounted on at least one device among devices operated on electric power generated by the power generation device.

6. The mobile hydrogen supply system according to any one of claims 1 to 5, wherein a plurality of devices among devices operated on electric power generated by the power generation device are transportable all together.

7. The mobile hydrogen supply system according to any one of claims 1 to 6, wherein the power generation device includes at least one of a wind power generation device, a solar power generation device, and a hydropower generation device.

8. The mobile hydrogen supply system according to claim 7, wherein the solar power generation device is configured to generate electric power while being transported.
